# EUROPEAN PATENT APPLICATION

(11) **EP 4 371 622 A1**
(43) Date of publication of application: **22.05.2024**
(21) Application number: 23200874.8
(22) Date of filing: 29.09.2023
(51) Int. Cl.: A62C 37/50, F27B 17/02, G01N 25/22

(54) **FIRE SUPPRESSION TEST DEVICE**

(30) Priority: 16.11.2022 US 202217988157
(71) Applicant: Kidde Technologies, Inc., Wilson, NC 27896 (US)
(72) Inventor: BALDWIN, Eli, Knightdale, 27545 (US); FAZZIO, Mark P., Wilson, 27896 (US)
(74) Representative: Dehns

(57) **Abstract**

A system (10) for testing a fire suppression agent (20) comprises an enclosed volume (12) configured to receive an amount of the fire suppression agent (20) therein, and at least one burner assembly (14) positioned within the enclosed volume (12). The at least one burner assembly (14) comprises a burner (24) configured to produce a flame (26), the burner (24) comprising a premixing section (36), a fuel source (32) in communication with the burner (24), an ignition source (34), and a first sensor (28) for measuring a first flame characteristic.

## Description

### BACKGROUND

The present invention relates generally to fire suppression agents and systems, and more specifically to the testing of such agents and systems.

Fire suppression systems deliver agent to a volume for the purpose of extinguishing, suppressing, or controlling a fire, and/or preventing a fire from starting or re-igniting. Successful protection requires agent to be delivered at a sufficient concentration throughout the volume. The design and certification of these systems typically require agent concentration measurements to be conducted. The agent concentration is then compared with levels established during separate laboratory fire tests (e.g., cup burner tests). For aerospace applications, Halon alternatives are being explored, and replacement agents must demonstrate equivalent performance. The current methods of proving equivalency in performance rely, in large part, on concentration testing and relating these concentrations to separate laboratory fire tests. Such methods are considered satisfactory for their intended purpose, however, a need exists for alternative testing methods demonstrating a correlation between concentration and fire suppression performance.

### SUMMARY

According to an aspect of the present invention, a system for testing a fire suppression agent comprises an enclosed volume configured to receive an amount of the fire suppression agent therein, and at least one burner assembly positioned within the enclosed volume. The at least one burner assembly comprises a burner configured to produce a flame, the burner comprising a premixing section, a fuel source in communication with the burner, an ignition source, and a first sensor for measuring a first flame characteristic.

According to an aspect of the present invention, a method of testing a fire suppression agent comprises placing an enclosed volume in flow communication with a first suppression system comprising a source of the fire suppression agent and a nozzle for introducing the fire suppression agent into the enclosed volume, placing at least one burner assembly within the enclosed volume, igniting a burner of the at least one burner assembly to produce a flame, releasing the fire suppression agent into the enclosed volume, and measuring a first flame characteristic with a first sensor of the burner assembly.

### BRIEF DESCRIPTION OF THE DRAWINGS

FIG. 1 is a schematic illustration of a first suppression test system.
FIG. 2 is a schematic illustration of a burner assembly for use in the fire suppression test system of FIG. 1.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the principles of the invention. The figures may not be drawn to scale, and applications and embodiments of the present invention may include features and components not specifically shown in the drawings.

### DETAILED DESCRIPTION

A system and method for validating the performance of a fire suppression system is disclosed herein. One or more burner assemblies capable of generating sustained flames can be positioned within a test volume, and a fire suppression agent can be applied within the volume. Each burner assembly includes sensors for measuring flame intensity, temperature, and duration during a test. Fire suppression agent concentrations can also be sampled across the test volume, allowing for the collocation of previously separately tested flame and fire suppression agent characteristics.

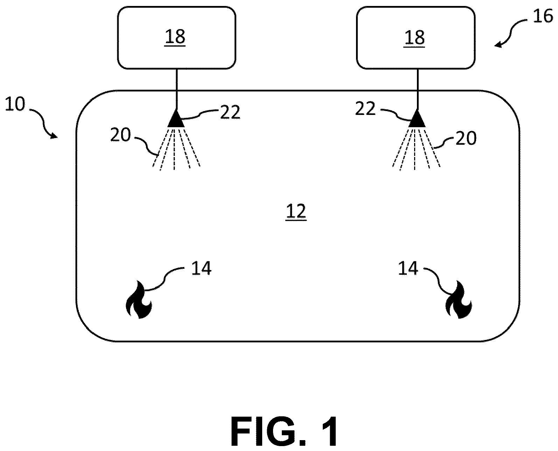

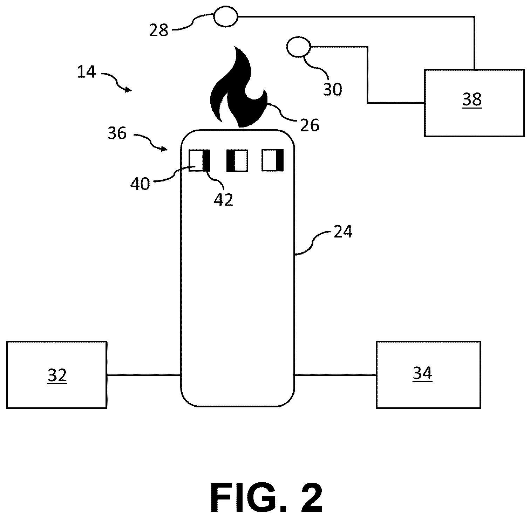

FIG. 1 is a schematic illustration of a fire suppression testing system 10. FIG. 2 is schematic illustration of burner assembly 14 for use with testing system 10. FIGS. 1 and 2 are discussed together.

Testing system 10 includes test volume 12 and at least one burner assembly 14. Test volume 12 is in communication with fire suppression system 16, which includes at least one source 18 (e.g., container) of fire suppression agent 20 and dispersal means 22 (e.g., a nozzle) for introducing fire suppression agent 20 into test volume 12. Dispersal means 22 can extend at least partially into test volume 12. Although shown as external to test volume 12, source 18 can be located within test volume 12 in an alternative embodiment, depending on, for example, the size of test volume 12 and/or fire suppression system 16.

Test volume 12 can be fully or partially enclosed space representative of a space protected by fire suppression system 16. In an exemplary embodiment, test volume 12 can be an actual space within an aerial vehicle, such as an aircraft engine nacelle, a cargo hold, a lavatory, etc. Accordingly, fire suppression agent 18 can be suitable for fires aboard an aerial vehicle including one or a combination of fluorocarbons, hydrofluorocarbons, halocarbons, inert gas, and dry carbonate compounds, to name a few non-limiting examples. In an alternative embodiment, test volume 12 can represent a space within a terrestrial vehicle, maritime vehicle, building, etc.

As shown in FIG. 1, two burner assemblies 14 are positioned within test volume 12. Alternative embodiments can include more than two burner assemblies 14, or only a single burner assembly 14, depending on, for example, the size and/or complexity of test volume 12. Burner assemblies 14 are compact and portable and are therefore easily positioned at various elevations and/or within tight spaces of test volume 12. Although portable, each burner assembly 14 can remain in one place during testing.

Each burner assembly 14 can include burner 24 for producing flame 26, and sensors 28 and 30 for monitoring flame 26 properties. Flame 26 can be a generally laminar flame in an exemplary embodiment. Burner 24 includes fuel source 32, ignition source 34, and premixing section 36. Fuel source 32 can be an external container, as schematically shown, or can be internal to burner 24. Fuel source 32 can store and provide fuel for ignition. In one embodiment, the fuel can be butane, but in an alternative embodiment, the fuel can be another alkane-based fuel (e.g., methane, ethane, propane, etc.), or other type of hydrocarbon fuel. Ignition source 34 can, be a battery or other source of DC power in wired connection to a spark ignitor or resistive heating element. Alternatively, a piezoelectric device can be used to power a spark ignitor. Ignition source 34 can provide continuous sparking in order to quantify not only a binary extinguishment and/or non-extinguishment during testing, but also the duration of fire protection. In an alternative embodiment, ignition source 34 can be manually (e.g., hand) operated.

Sensor 28 can be a photodiode for monitoring light from flame 26. More specifically, the photodiode produces voltage as it adsorbs photons from flame 26. The voltage can be proportional to flame (i.e., light) intensity. External device 38 (e.g., with a processor, a microcontroller, etc.) can be in wired or wireless communication with sensor 28 for monitoring photodiode voltage production. Sensor 30 can be a thermocouple for measuring the heat produced by flame 26. Sensor 30 can also be in wired or wireless communication with external device 38 for monitoring temperature. Sensors 28 and 30 can be positioned proximate flame 26. In an alternative embodiment, system 10 can include only a single sensor or type of sensor (e.g., a photodiode) per burner assembly 14.

Premixing section 36 of burner 24 includes slots 40 for allowing air to mix with fuel to control the intensity of flame 26, for example, making flame 26 more difficult to extinguish, thus testing the capabilities of fire suppression system 16. In some embodiments, inner rotatable shutter 42 can be included to vary the amount of air permitted through slots 40, for example, allowing essentially no air through in a fully closed state, allowing a maximum amount of air through in a fully open state, and allowing some air through in various intermediate states. In an alternative embodiment, a source of oxygen (not shown), whether pure or in a mixture (i.e., air), can be placed in communication with premixing section 36 for generating a more intense flame 26 than with air alone.

In operation of system 10, one or more burner assemblies 14 can be positioned in desired locations throughout test volume 12. Such locations can represent high-risk areas, peripheral areas, or generally any area for which specific fire suppression measurements are desired. Each burner 24 can then be ignited via ignition source 34 or other (e.g., manual means). Flame 26 intensity can be controlled fuel source 32 and/or premixing section 36. Fire suppression system 16 can then be activated (or will manually activate) to extinguish the various flames 26. Sensor 28 (i.e., photodiode) measures the intensity and length of time a respective flame 26 is burning, based on the amount of current produced and the duration of current production. Sensor 30 (i.e., thermocouple) measures the temperature of flame 26. A baseline temperature of the area of burner 24 with no flame 26 can be taken such that higher temperatures can be indicative of some degree of a respective flame 26. Similarly, sensor 28 can be configured to respond to a threshold light intensity such that ambient light (if any) does not cause sensor 28 to produce current.

Fire suppression agent 20 can be variously dispersed throughout test volume 12 and may partially or completely extinguish flame(s) 26, the occurrence of which can be determined by data from each set of sensors 28 and 30. In some embodiments, ignition sources 34 can operate to ignite a respective burner 24 even after extinguishing of a respective flame 26 in order to test the ability of a particular fire suppression agent 20 to suppress flame(s) 26 and prevent reignition. After all flames 26 are sufficiently extinguished, concentrations of fire suppression agent 20 can be recorded at various locations throughout test volume 12 and compared with data from flames 26 throughout test volume 12. For a given concentration of fire suppression agent 20, the following can be determined: the ability of fire suppression system 16 to extinguish all flames 26 in test volume 12, the minimum and maximum intensity and temperature for each flame 26, the duration of each flame 26, and whether or not any flame 26 was reignited, and when reignition occurred. It can then be determined if the concentration of fire suppression agent 20 should be adjusted (e.g., increased), or if the extent of application of fire suppression agent 20 within test volume 12 is sufficient. In general, a greater number of burner assemblies 14 will provide more data points for analysis, however, a single burner assembly 14 can provide sufficient data in some embodiments.

The disclosed test system and method are suitable for use with almost any space and/or fire suppression system, whether vehicle-borne or stationary. The use of discrete burner assemblies producing laminar flames is also safer that larger pan-style fires generated in some testing methods, allowing the test system to be used in actual spaces.

### Discussion of Possible Embodiments

The following are non-exclusive descriptions of possible embodiments of the present invention.

A system for testing a fire suppression agent comprises an enclosed volume configured to receive an amount of the fire suppression agent therein, and at least one burner assembly positioned within the enclosed volume. The at least one burner assembly comprises a burner configured to produce a flame, the burner comprising a premixing section, a fuel source in communication with the burner, an ignition source, and a first sensor for measuring a first flame characteristic.

The system of the preceding paragraph can optionally include, additionally and/or alternatively, any one or more of the following features, configurations and/or additional components:
In the above system, a source of the fire suppression agent can be in flow communication with the enclosed volume.

In any of the above systems, the fire suppression agent can include at least one of a fluorocarbon, a halocarbon, an inert gas, and a dry carbonate compound.

In any of the above systems, the first sensor can be a photodiode, and the first flame characteristic can be light intensity.

Any of the above systems can further include a second sensor for measuring a second flame characteristic.

In any of the above systems, the second sensor can be a thermocouple, and the second flame characteristic can be temperature.

In any of the above systems, the first sensor and the second sensor can each be in communication with an external device.

In any of the above systems, the premixing section can include slots allowing air to enter the burner.

In any of the above systems, the fuel source can contain an alkane-based fuel.

In any of the above systems, the fuel source can be external to the burner.

In any of the above systems, the ignition source can be a DC power source.

In any of the above systems, the at least one burner assembly can include a first burner assembly and a second burner assembly.

In any of the above systems, the first burner assembly can be positioned at a first location within the enclosed volume, and the second burner assembly can be positioned at a second location within the enclosed volume, the second location being different from the first location.

A method of testing a fire suppression agent comprises placing an enclosed volume in flow communication with a first suppression system comprising a source of the fire suppression agent and a nozzle for introducing the fire suppression agent into the enclosed volume, placing at least one burner assembly within the enclosed volume, igniting a burner of the at least one burner assembly to produce a flame, releasing the fire suppression agent into the enclosed volume, and measuring a first flame characteristic with a first sensor of the burner assembly.

The method of the preceding paragraph can optionally include, additionally and/or alternatively, any one or more of the following features, configurations and/or additional components:
In the above method, the step of igniting the burner can include using an DC powered ignition device.

In any of the above methods, the step of igniting the burner can further include mixing fuel of the burner assembly with air at a premixing section of the burner assembly.

In any of the above methods, the first flame characteristic can be light intensity, and the first sensor can be a photodiode.

Any of the above methods can further include measuring a second flame characteristic with a second sensor of the burner assembly.

In any of the above methods, the second flame characteristic can be temperature, and the second sensor can be a thermocouple.

In any of the above methods, the at least one burner assembly can include a first burner assembly and a second burner assembly.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system (10) for testing a fire suppression agent (20), the system (10) comprising:
an enclosed volume (12) configured to receive an amount of the fire suppression agent (20) therein; and
at least one burner assembly (14) positioned within the enclosed volume (12), the at least one burner assembly (14) comprising:
a burner (24) configured to produce a flame (26), the burner (24) comprising a premixing section (36);
a fuel source (32) in communication with the burner (24);
an ignition source (34); and
a first sensor (28) for measuring a first flame characteristic.

2. The system of claim 1, wherein:
a source of the fire suppression agent (20) is in flow communication with the enclosed volume (12); and/or
the fire suppression agent comprises at least one of a fluorocarbon, a halocarbon, an inert gas, and a dry carbonate compound.

3. The system of claim 1 or 2, wherein the first sensor (28) is a photodiode, and wherein the first flame characteristic is light intensity.

4. The system of any preceding claim and further comprising: a second sensor (30) for measuring a second flame characteristic and wherein, optionally, the second sensor (30) is a thermocouple, and wherein, optionally, the second flame characteristic is temperature.

5. The system of claim 4, wherein the first sensor (28) and the second sensor (30) are each in communication with an external device (38).

6. The system of any preceding claim, wherein the premixing section (36) comprises slots (40) allowing air to enter the burner (24).

7. The system of any preceding claim, wherein the fuel source (32):
contains an alkane-based fuel; and/or
is external to the burner (24).

8. The system of any preceding claim, wherein the ignition source (34) is a DC power source.

9. The system of any preceding claim, wherein the at least one burner assembly (14) comprises a first burner assembly and a second burner assembly.

10. The system of claim 9, wherein the first burner assembly is positioned at a first location within the enclosed volume (12), and wherein the second burner assembly is positioned at a second location within the enclosed volume (12), the second location being different from the first location.

11. A method of testing a fire suppression agent (20), the method comprising:
placing an enclosed volume (12) in flow communication with a first suppression system (16); the fire suppression system (16) comprising:
a source (18) of the fire suppression agent (20); and
a nozzle (22) for introducing the fire suppression agent (20) into the enclosed volume (12);
placing at least one burner assembly (14) within the enclosed volume (12);
igniting a burner (24) of the at least one burner assembly (14) to produce a flame (26);
releasing the fire suppression agent (20) into the enclosed volume (12); and
measuring a first flame characteristic with a first sensor (28) of the burner assembly (14).

12. The method of claim 11, wherein the step of igniting the burner (24) comprises: using an DC powered ignition device (34); and/or wherein the step of igniting the burner (24) further comprises: mixing fuel of the burner assembly with air at a premixing section (36) of the burner assembly (14).

13. The method of claim 11 or 12, wherein the first flame characteristic is light intensity, and wherein the first sensor (28) is a photodiode.

14. The method of any of claims 11 to 13 and further comprising: measuring a second flame characteristic with a second sensor (30) of the burner assembly, and wherein, optionally, the second flame characteristic is temperature, and wherein the second sensor (30) is a thermocouple.

15. The method of any of claims 11 to 14, wherein the at least one burner assembly (14) comprises a first burner assembly and a second burner assembly.
